# EUROPÄISCHE PATENTSCHRIFT

(11) **EP 3 006 833 B1**
(45) Veröffentlichungstag und Bekanntmachung des Hinweises auf die Patenterteilung: **21.06.2017**
(21) Anmeldenummer: 15186036.8
(22) Anmeldetag: 21.09.2015
(51) Int. Cl.: F24C 15/16

(54) **VORRICHTUNG ZUR BEWEGUNGSFÜHRUNG EINES SCHUBELEMENTS, SCHUBELEMENT UND MÖBEL**
DEVICE FOR GUIDING THE MOVEMENT OF A DRAWER ELEMENT, DRAWER ELEMENT AND FURNITURE
DISPOSITIF DE GUIDAGE DE MOUVEMENT D'UN ELEMENT DE POUSSEE, ELEMENT DE POUSSEE ET MEUBLE

(30) Priorität: 07.10.2014 DE 202014104795 U
(43) Veröffentlichungstag der Anmeldung: 13.04.2016
(73) Patentinhaber: Grass GmbH, 6973 Höchst (AT)
(72) Erfinder: Huber, Franz, 5211 Lengau (AT)
(74) Vertreter: Otten, Roth, Dobler & Partner mbB Patentanwälte

(56) Entgegenhaltungen:
- EP-A1- 2 532 976
- DE-A1-102010 021 283
- DE-A1-102010 043 532
- DE-A1-102011 002 257

## Beschreibung

### Stand der Technik

Im Möbelbereich wie bei Küchenmöbeln und Kücheneinrichtungen beispielsweise bei Backöfen sind Vorrichtungen zur Führung eines Schubelements bekannt, wobei die Führungsvorrichtungen an Stabanordnungen von Seitenwand-Abschnitten aufgenommen sind. Eine solche Vorrichtung, die den Oberbegriff des Anspruchs 1 offenbart, ist aus DE 10 2011 002 257 A1 bekannt. Die Anbringung des Schubelements an den Stabanordnungen ist in aller Regel lösbar, was für eine Nachrüstung bzw. aus Reinigungsgründen zweckmäßig ist.

Das mit der Führungsvorrichtung am Möbel herausziehbare und hineinschiebbare Schubelement ist zum Beispiel ein Gargutträger wie ein Backblech oder Backrost eines Backofens, ein Ausziehboden oder eine Schublade.

Die Schiebeführung des Schubelements erfolgt beidseitig mit jeweils einer Führungseinheit, an denen das Schubelement aufsetzbar ist und welche beispielsweise an einem Seitengitter eines Backofens auf einer gemeinsamen vertikalen Höhe befestigt werden.

Im Möbelbereich, insbesondere bei Küchenmöbeln müssen bedienerfreundliche Anordnungen und sichere Anbindungsmöglichkeiten der Schubelemente über die Führungen sichergestellt sein.

### Aufgabe und Vorteile der Erfindung

Aufgabe der vorliegenden Erfindung ist es, einleitend bezeichnete Vorrichtungen bzw. Schubelemente oder Möbel auf vorteilhafte Weise bereitzustellen, insbesondere im Hinblick auf eine sichere und praxistaugliche Anbindung eines Schubelements jeweils an einem Seitengitter an Seitenwand-Abschnitten.

Diese Aufgabe wird durch die Merkmale des Anspruchs 1 gelöst.

Die abhängigen Ansprüche thematisieren vorteilhafte Varianten der Erfindung.

Zunächst geht die Erfindung aus von einer Vorrichtung zur Bewegungsführung eines Schubelements, das mittels der Vorrichtung an einem Seitenwand-Abschnitt beweglich anordenbar ist, wobei die Vorrichtung eine dem Seitenwand-Abschnitt zuordenbare Trägerschiene und eine mit dem Schubelement zusammenwirkende Auszugschiene umfasst, welche relativ zur Trägerschiene verschieblich ist, und wobei die Trägerschiene an einer Stabanordnung am Seitenwand-Abschnitt über Haltemittel, die auf die Stabanordnung abgestimmt sind, lösbar anbringbar ist. Der Seitenwand-Abschnitt ist beispielsweise eine Seitenwand eines Backofens, wobei die daran vorhandene Stabanordnung ein insbesondere mit horizontal verlaufenden Stäben angeordnetes Seitengitter ist. In einem Backrohr sind z. B. zwei gegenüberliegende Seitengitter an den jeweiligen Seitenwänden lösbar eingesteckt und stehen an diesen etwas in das Backrohr-Volumen vor.

Die Vorrichtung basiert insbesondere auf Führungen bzw. Führungseinheiten, die als teleskopierbare Teilauszüge oder Vollauszüge ausgebildet sind. Bei Teilauszügen umfasst eine Führungseinheit eine Trägerschiene und eine Führungsschiene, wobei die Führungsschiene dem Schubelement zugeordnet ist und mit diesem bewegbar ist und die Trägerschiene an dem Wandabschnitt fixierbar ist. Bei einem Vollauszug ist zusätzlich eine Mittelschiene vorhanden, welche zwischen der Trägerschiene und der Führungsschiene verschiebbar wirkt.

Der Kern der Erfindung liegt darin, dass die Haltemittel derart ausgebildet sind, dass die Haltemittel an einem horizontal ausgerichteten Stababschnitt der Stabanordnung anliegend festlegbar sind, wobei die Haltemittel zusätzlich an einem vertikal ausgerichteten Stababschnitt der Stabanordnung über einen Teilumfang des vertikal ausgerichteten Stababschnitts umgreifend anliegen, so dass die Vorrichtung zur Bewegungsführung an der Stabanordnung fixierbar ist. Insbesondere sind die Haltemittel am vertikalen Stababschnitt der Stabanordnung derart umgreifend anlegbar, dass eine Bewegung der Haltemittel aufgrund der vertikalen Stababschnitte bzw. des vertikalen Stababschnitts in zumindest zwei insbesondere entgegengesetzte Richtungen unterbunden ist. Damit kann ein Schubelement einfach und sicher über die an den Seitengittern fixierten Führungen montiert und befestigt werden, wobei zusätzlich eine kippsichere Anbringung erfolgt, womit das beladene Schubelement aus dem Inneren des Möbelteils bzw. des Backofens problemlos über die gesamte Tiefe des Schubelements ausziehbar ist, ohne dass das Schubelement vorne nach unten kippen kann.

Bislang kann es aufgrund von nicht geeignet ausgebildeten Bewegungsführungen bzw. von Bewegungsführungen, welche an Seitengittern nicht kippsicher anbringbar sind, zu Unfällen beim Herausziehen von Schubelementen aus der Backröhre samt deren Beladung kommen, indem sich die Befestigung an einem Seitengitter löst und/oder das Schubelement vorne nach unten verkippt. Solche insbesondere im Garbetrieb bei hohen Innentemperaturen in der Backröhre problematischen Szenarien lassen sich durch die Erfindung vermeiden. Daneben lässt sich die erfindungsgemäße Vorrichtung vorteilhaft ohne Weiteres an der Stabanordnung bzw. dem Seitengitter manuell fest anbringen und abnehmen. Die bislang verwendeten Führungsvorrichtungen sind diesbezüglich nur unzureichend abgestimmt. Erfindungsgemäß weisen die Haltemittel ein Halteelement mit einem Anlageabschnitt auf, welcher an dem horizontal ausgerichteten Stababschnitt der Stabanordnung in Anlage bringbar ist, wobei ein an dem Halteelement verstellbares Klemmteil vorhanden ist, das in einer Klemmstellung auf einer dem Anlageabschnitt gegenüberliegenden Seite vorhanden ist für ein Verklemmen an dem horizontalen Stababschnitt, wobei ein Abstand zwischen dem Anlageabschnitt und dem Klemmteil in der Klemmstellung des Klemmteils auf ein Außenmaß des horizontal ausgerichteten Stababschnitts der Stabanordnung abgestimmt ist.

Mit dem relativ zum Anlageabschnitt verstellbaren Klemmteil kann das Klemmteil aus einer nicht klemmenden Stellung in eine klemmende Stellung gebracht werden, wenn die Führungsvorrichtung an der Stabanordnung eingehängt ist. Vor bzw. bei dem Einhängen der Führungsvorrichtung befindet sich demgemäß das Klemmteil in der nicht klemmenden Stellung. Wenn die Führungsvorrichtung eingehängt ist, sitzt der Anlageabschnitt an einer Seite insbesondere oben am horizontalen Stababschnitt auf, so dass sich die Führungsvorrichtung am horizontalen Stababschnitt abstützt. Dabei wird im Nutzzustand zumindest ein Anteil des an der Führungsvorrichtung wirkenden Gewichts über das Halteelement auf den Stababschnitt und damit über die Stabanordnung in den Seitenwand-Abschnitt abgeführt bzw. aufgenommen. Wird anschließend das Klemmteil in die klemmende Stellung verstellt, ist am betreffenden horizontalen Stababschnitt eine Verklemmung und Positionsfixierung der Trägerschiene eingerichtet. Oberseitig außen an dem Stababschnitt liegt der Anlageabschnitt an und gegenüberliegend unterseitig drückt das Klemmteil gegen den Stababschnitt. Der Verstellweg des Klemmteils in die und aus der Klemmstellung ist insbesondere vergleichsweise gering, er beträgt zum Beispiel ca. 10 bis 30 insbesondere ca. 15 Winkelgrade um eine Schwenkachse, um welche das Klemmteil durch ein Verschwenken verstellbar ist.

Mit dem Verklemmen wird eine spielfreie und sichere Fixierung am Stababschnitt mit den Haltemitteln eingerichtet. Der Anlageabschnitt des Halteelements ist insbesondere hakenförmig bzw. mit einer Kontaktseite an die Außenform des horizontalen Stababschnitts abgestimmt. Die Stabanordnung umfasst in der Regel Stäbe mit einheitlicher zylindrischer Außenabmessung, so dass die Kontaktseite des Anlageabschnitts vorteilhaft für ein Einhaken von oben halbkreisförmig ist bzw. eine Anlage über einen halben Umfang bzw. ca. 180 Winkelgrade ermöglicht. Damit wird im verklemmten Zustand mit dem hakenförmigen Anlageabschnitt des Halteelements einem Wegbewegen der Trägerschiene von dem horizontalen Stababschnitt quer zu dessen Längserstreckung und nach unten entgegengewirkt und mit dem Klemmteil ein Wegbewegen zunächst nach oben verhindert. Die Trägerschiene ist somit gegen ein Wegbewegen insbesondere in allen möglichen Bewegungsrichtungen relativ zur Stabanordnung daran gesichert.

Ein Anlageabschnitt des Klemmteils, der in der Klemmstellung gegenüberliegend von unten am Stababschnitt anliegt, ist vorteilhaft geradlinig, womit im Klemmzustand das Klemmteil mit dem Anlageabschnitt am horizontalen Stababschnitt tangential anliegt.

Die Führungsvorrichtung bzw. die Trägerschiene wird neben der Stelle, an welcher der horizontal und der vertikal ausgerichtete Stababschnitt von dem Halteelement umgriffen wird, in aller Regel mit einer weiteren Lagerstelle an der Stabanordnung abgestützt, was weiter unten noch näher erläutert ist. Erfindungsgemäß ist das Klemmteil an einem elastisch ausweichbar an dem Halteelement vorhandenen Bedienabschnitt ausgebildet. Durch die z. B. vorgespannte Ausweichbarkeit des Bedienabschnitts kann sich eine Ausgangsstellung des Klemmteils an dem Halteelement selbsttätig einstellen, wenn kein Klemmzustand herrscht. Damit lässt sich die Führungsvorrichtung bequem an der Stabanordnung anbringen.

Auch ist es vorteilhaft, dass der Bedienabschnitt für eine manuelle Verstellung des Klemmteils ausgestaltet ist. So kann auf den Bedienabschnitt beispielsweise von einer Person eingewirkt werden, insbesondere um die Vorrichtung ohne Werkzeug an der Stabanordnung bzw. dem Seitengitter klemmend zu sichern und wieder zu entsichern.

Es ist überdies vorteilhaft, dass die Haltemittel genau ein vorderes Halteelement in einem vorderen Bereich der Trägerschiene umfassen. Damit kann die Trägerschiene an der Stabanordnung einfach befestigt werden. Die Befestigung erfolgt vorteilhaft nahe einer für eine Person von vorne gut zugänglichen Öffnung des dazugehörigen Möbels bzw. der Kücheneinrichtung wie einem Backofen.

Eine vorteilhafte Modifikation des Erfindungsgegenstandes zeichnet sich dadurch aus, dass die Haltemittel ein vorderes Halteelement in einem vorderen Endbereich der Trägerschiene und vom vorderen Halteelement beabstandet eine weitere Haltefunktion an der Trägerschiene ausgebildet ist, über welche die Trägerschiene an der Stabanordnung festlegbar ist. Dies ermöglicht neben der bereits diskutierten Befestigung des vorderen Bereichs der Trägerschien mit dem Halteelement eine zusätzliche Befestigung weiter hinten in Richtung des hinteren Endes der Trägerschiene. Damit ist die Trägerschiene und damit die Führungsvorrichtung über wenigstens zwei Lagerstellen an der Stabanordnung mechanisch vorteilhaft fixierbar.

Weiter ist es von Vorteil, dass das Klemmteil als plattenförmiges Blechteil ausgestaltet ist. So kann auf einfache Weise die Anordnung realisiert werden, insbesondere da die Trägerschiene selbst in der Regel aus einem Blechprofil gebildet ist.

Vorteilhafterweise ist das vordere Halteelement fest fixiert an der Trägerschiene vorhanden. Damit wird eine besonders stabile Anordnung erreicht. Erfindungsgemäß weist das Halteelement einen U-förmigen Vertikalabschnitt zur Umgreifung des vertikal ausgerichteten Stababschnitts der Stabanordnung auf. So lässt sich die Anbringung und Entfernung mit dem Halteelement am vertikalen insbesondere zylindrischen Stababschnitt besonders einfach und mit einem hohen Flächenkontakt realisieren. Erfindungsgemäß ist der Anlageabschnitt des Halteelements an einem Schenkel des U-förmigen Vertikalabschnitts ausgebildet. Bevorzugt sind im eingehängten Zustand des Anlageabschnitts am horizontalen Stababschnitt und beide Schenkel mit einem die Schenkel verbindenden Zwischenabschnitt anliegend am vertikalen Stababschnitt in Kontakt.

Vorteilhafterweise ist der Anlageabschnitt des Halteelements an einem oberen Ende eines Schenkels des U-förmigen Vertikalabschnitts ausgebildet. Insbesondere ist der Anlageabschnitt hakenartig an dem Schenkel ausgebildet. Vorteilhafterweise kann die Anbringung im mechanisch besonders belastbaren Bereich einer Verbindungsstelle des vertikalen Stababschnitts mit dem horizontalen Stababschnitt in deren Kreuzungsbereich erfolgen.

Die Erfindung betrifft außerdem ein Schubelement, das an einem Wandabschnitt bewegbar anordenbar ist, insbesondere Gargutträger für einen Backofen, wobei eine Vorrichtung gemäß einer der oben genannten Ausbildungen vorhanden ist. Damit lassen sich die genannten Vorteile an dem Schubelement, insbesondere an einem Back-Gitterrost, Backblech oder einer Auflagewanne für Backöfen ausgestalten.

Des Weiteren betrifft die Erfindung ein Möbel, insbesondere ein Backofen mit gegenüberliegenden Seitengittern mit einer Vorrichtung wie vorgenannt beschrieben. So lässt sich das Möbel, vorteilhaft mit einer Bewegungsführung für ein Schubelement wie ein Backgitter oder Backblech an den Seitengittern realisieren.

### Figurenbeschreibung

Weitere Merkmale und Vorteile der Erfindung sind anhand eines beispielhaft dargestellten Ausführungsbeispiels der Erfindung näher erläutert. Im Einzelnen zeigt:
- Figur 1: eine perspektivische schematische Ansicht eines Backgitters und einer Auflagewanne, die jeweils auf einer Seite an einem Seitengitter über eine Führungseinheit aufgenommen sind im ausgefahrenen Zustand,
- Figuren 2 und 3: jeweils eine ausschnittsweise perspektivische Detailansicht der Anbringung der Führungseinheit an dem Seitengitter in einem gesicherten und einem ungesicherten Zustand,
- Figur 4: der gesicherte Zustand gemäß Figur 2 in einer weiteren rückseitigen Perspektive und
- Figuren 5 und 6: die Haltemittel an dem Seitengitter wie in den Figuren 3 und 4 gezeigt, im Vertikalschnitt durch das Seitengitter jeweils in einer Seitenansicht von innen.

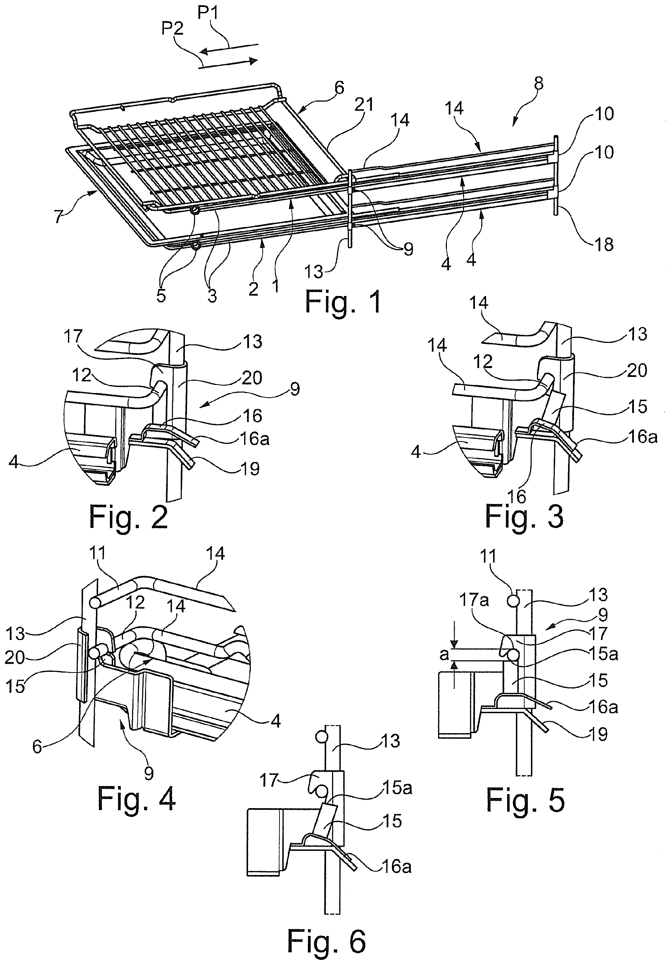

In Figur 1 sind zwei erfindungsgemäße identische Führungseinheiten 1 und 2 für einen nicht weiter gezeigten Backofen dargestellt mit jeweils einer Auszugschiene 3 und einer Trägerschiene 4, die zueinander teleskopierbar bzw. verschieblich sind. Gemäß Figur 1 sind die Auszugschienen 3 relativ zu den Trägerschienen 4 ausgefahren. Die Auszugschienen 3 sind jeweils mit einer Stützrolle 5 am vorderen Ende versehen. An der oberen Führungseinheit 1 ist ein als oberes Ablagegitter 6 ausgebildeter Gargutträger und an der unteren Führungseinheit 2 ist ein als untere Auflagewanne 7 ausgebildeter zusätzlicher Gargutträger an einem Seitengitter 8 einer ersten Backofen-Seitenwand (nicht gezeigt) aufgenommen. An einer der ersten Backofen-Seitenwand gegenüberliegenden zweiten Backofen-Seitenwand mit einem dem Seitengitter 8 identischen Seitengitter ist an dem Ablagegitter 6 und an der Auflagewanne 7 jeweils eine weitere erfindungsgemäße Führungseinheit (nicht gezeigt) für die beidseitige horizontale verschiebliche Anbringung des Backgitters 6 und der Auflagewanne 7 zwischen den vertikalen nicht dargestellten Backofen-Seitenwänden vorhanden. Mit den Führungseinheiten 1, 2 und den nicht gezeigten weiteren Führungseinheiten lässt sich das Ablagegitter 6 und die Auflagewanne 7 in Ausschiebrichtung P1 und entgegengesetzt in Einschieberichtung P2 horizontal verschieben.

Das Seitengitter 8 entspricht einer bekannten Ausführung von Seitengittern an Backofen-Seitenwänden.

Die Gargutträger 6, 7 liegen an den Seitengittern 8 nicht unmittelbar auf, sondern werden von den Führungseinheiten 1, 2 getragen. Das Ablagegitters 6 wie auch die Auflagewanne 7 sind randseitig mit der Laufschiene 3 aufliegend verbunden.

Zur sicheren Fixierung der Trägerschienen 4 an dem Seitengitter 8 sind Haltemittel vorgesehen, welche Montageklammern bzw. eine vordere Halterung 9 und eine hintere Halterung 10 umfassen.

In den Figuren 2 und 3 ist die Halterung 9 der oberen Trägerschiene 4 von innen bzw. von einer zum Backofen-Innenraum zugewandten Seite und in Figur 4 von außen bzw. von einer zur Backofen-Seitenwand zugewandten Seite gezeigt.

Die Figuren 3 und 4 betreffen Ansichten von innen im Schnitt parallel zur Backofen-Seitenwand durch Stababschnitte 11 und 12, die in den Backofen-Innenraum Backrohr hinein ausgerichtet sind und quer zu einem vertikalen Stababschnitt 13 abstehen, mit dem die Stababschnitte 11, 12 fest verbunden sind.
Die Stababschnitte 11, 12 verlängern sich nach einer rechtwinkligen Umbiegung in einen horizontalen Längs-Stababschnitt 14.

Die Halterung 9 ist am vorderen Endbereich der Trägerschiene 4 als Blechteil ausgebildet, welches einen Grundkörper mit mehreren Umbiegungen bzw. geformten Abschnitten aufweist. Die Halterung 9 ist insbesondere für eine passende Anbringung an einer Anbringstelle am Seitengitter 8 im Bereich der Stababschnitte 12 und 13 abgestimmt. Außerdem ist an der Halterung 9 ein Klemmteil vorhanden, das beispielhaft als federnd auslenkbares Verriegelungselement 15 bzw. als rechteckförmige Blechlasche ausgestaltet ist. Das Verriegelungselement 15 steht oberseitig an einem am Grundkörper der Halterung 9 bewegbaren bzw. schwenkbaren Steg 16 ab. Der Steg 16 weist zudem einen Bedienabschnitt 16a auf, der für eine manuelle Verstellung der Halterung 9 bzw. des Verriegelungselement 15 dient, um dieses in eine klemmende Stellung am Seitengitter 8 bzw. dem Stababschnitt 12 gemäß der Figuren 2, 4 und 5 und eine nicht klemmende Stellung am Seitengitter 8 gemäß der Figuren 3 und 6 zu verstellen. Die nicht klemmende Stellung wird erreicht, indem der Bedienabschnitt 16a nach unten gedrückt wird, maximal bis zur oberseitigen Anlage an einer schrägen Auslenkbegrenzung 19.

Des Weiteren ist ein rinnenförmiger bzw. U-förmiger Umgreifungsabschnitt 20 zum Einhaken am vertikalen Stababschnitt 13 ausgebildet, der mit einem oberen Schenkel in einen Hakenabschnitt 17 übergeht. Der Hakenabschnitt 17 weist eine halbkreisförmige Unterseite auf, die in der Form und Abmessung an den Stababschnitt 12 angepasst ist und zum oberseitigen umfänglichen Umgreifen des Stababschnitts 12 im Einhängezustand der Trägerschiene 4 am Seitengitter 8 dient.

Die Trägerschiene 4 wird demgemäß an dem standardisierten Seitengitter 8 mittels der vorderen Halterung 9 am vertikalen Stababschnitt 13 und am Stababschnitt 12 in deren Kreuzungs- bzw. Verbindungsbereich lösbar befestigt.

Zur klemmenden Fixierung wird das Verriegelungselement 15 nach oben in Richtung des Stababschnitts 12 gedrückt bis eine Vorderkante 15a des Verriegelungselements 15 unterseitig klemmend am Stababschnitt 12 andrückt (s. Figur 5), wobei oberseitig am Stababschnitt 12 der Hakenabschnitt 17 mit einer halbkreisförmigen Randkontur 17a aufsitzt und gegen den Stababschnitt 12 drückt. Ein Abstand a zwischen der Randkontur 17a des Hakenabschnitts 17 und der Vorderkante 15a des Verriegelungselements 15 entspricht im Klemmzustand dem Durchmesser des Stababschnitts 12. Die Halterung 9 und damit ein vorderes Ende der Trägerschiene 4 bzw. die Führungseinheit 1 ist auf diese Weise klemmend am Seitengitter 8 eingehängt und fixiert.

Ein hinteres Ende der Trägerschiene 4 kann auf gleiche Art oder auf eine alternative Weise am hinteren Bereich des Seitengitters 8 an einem weitere vertikalen Stababschnitt 18 mit der Halterung 10 des Seitengitters 8 festgelegt werden.

Durch das klemmende federnde Verriegelungselement 15 wird Führungseinheit 1 gegen unbeabsichtigtes Aushängen gesichert. Durch ein gezieltes Drücken des Bedienabschnitts 16a nach unten wird das klemmende Verriegelungselement 15 gemäß der Figuren 2, 4 und 5 gelöst bzw. der Klemm- bzw. Verriegelungsmechanismus aufgehoben (s. Figuren 3 und 6), so dass sich die Führungseinheit 1 vom Seitengitter 8 aushängen lässt.

Die Halterung 9 wird zur Montage der Führungseinheit 1 an den Stababschnitten 12, 13 des Seitengitters 8 eingehängt und umschließt den vorderen vertikalen Stababschnitt 13 des Seitengitters teilweise. Das Ablagegitter 6 liegt selbst auf der Führungseinheit 1 bzw. deren Laufschiene 3 auf. Die im eingeschobenen Zustand der Führungseinheit 1 die Laufschiene 3 aufnehmende Trägerschiene 4 ist unterhalb entlang des Längs-Stababschnitts 14 nach innen versetzt positioniert.

Bei vollständig in Richtung P1 herausgezogenen Auszugschiene 3 mit dem Ablagegitter 6 kann dieses vorne nicht nach unten kippen, da ein hinterer Querstab 21 des Ablagegitters 6 von unten gegen den stababschnitt 11 bzw. den daran anschließenden Längs-Stababschnitt 14 anstößt. Entsprechend ist die Auflagewanne 7 kippgesichert.

### Bezugszeichenliste:

- 1: Führungseinheit
- 2: Führungseinheit
- 3: Auszugschiene
- 4: Trägerschiene
- 5: Stützrolle
- 6: Ablagegitter
- 7: Auflagewanne
- 8: Seitengitter
- 9: Halterung
- 10: Halterung
- 11: Stababschnitt
- 12: Stababschnitt
- 13: Stababschnitt
- 14: Längs-Stababschnitt
- 15: Verriegelungselement
- 15a: Vorderkante
- 16: Steg
- 16a: Bedienabschnitt
- 17: Hakenabschnitt
- 17a: Randkontur
- 18: Stababschnitt
- 19: Auslenkbegrenzung
- 20: Umgreifungsabschnitt
- 21: Querstab

## Patentansprüche

1. Vorrichtung (1, 2) zur Bewegungsführung eines Schubelements, das mittels der Vorrichtung (1, 2) an einem Seitenwand-Abschnitt beweglich anordenbar ist, wobei die Vorrichtung (1, 2) eine dem Seitenwand-Abschnitt zuordenbare Trägerschiene (4) und eine mit dem Schubelement zusammenwirkende Auszugschiene (3) umfasst, welche relativ zur Trägerschiene (4) verschieblich ist, und wobei die Trägerschiene (4) an einer Stabanordnung (8) am Seitenwand-Abschnitt über Haltemittel, die auf die Stabanordnung (8) abgestimmt sind, lösbar anbringbar ist wobei die Haltemittel derart ausgebildet sind, dass die Haltemittel an einem horizontal ausgerichteten Stababschnitt (12) der Stabanordnung (8) anliegend festlegbar sind, wobei die Haltemittel zusätzlich an einem vertikal ausgerichteten Stababschnitt (13) der Stabanordnung (8) über einen Teilumfang des vertikal ausgerichteten Stababschnitts (13) umgreifend anliegen, so dass die Vorrichtung (1, 2) zur Bewegungsführung an der Stabanordnung (8) fixierbar ist, wobei die Haltemittel ein Halteelement (9) mit einem Anlageabschnitt (17) aufweisen, welcher an dem horizontal ausgerichteten Stababschnitt (12) der Stabanordnung (8) in Anlage bringbar ist, und ein an dem Halteelement (9) verstellbares Klemmteil (15) vorhanden ist, das in einer Klemmstellung auf einer dem Anlageabschnitt (17) gegenüberliegenden Seite vorhanden ist für ein Verklemmen an dem horizontalen Stababschnitt (12), wobei ein Abstand zwischen dem Anlageabschnitt (17) und dem Klemmteil (15) in der Klemmstellung des Klemmteils (15) auf ein Außenmaß des horizontal ausgerichteten Stababschnitts (12) der Stabanordnung (8) abgestimmt ist, und das Klemmteil (15) an einem elastisch ausweichbar an dem Halteelement (9) vorhandenen Bedienabschnitt (16a) ausgebildet ist, **dadurch gekennzeichnet, dass** das Halteelement (9) einen U-förmigen Vertikalabschnitt (20) zur Umgreifung des vertikal ausgerichteten Stababschnitts (13) der Stabanordnung (8) aufweist, wobei der Anlageabschnitt (17) des Halteelements (9) an einem Schenkel des U-förmigen Vertikalabschnitts (20) ausgebildet ist.

2. Vorrichtung nach Anspruch 1 **dadurch gekennzeichnet, dass** der Bedienabschnitt (16a) für eine manuelle Verstellung des Klemmteils (15) ausgestaltet ist.

3. Vorrichtung nach einem der vorhergehenden Ansprüche, **dadurch gekennzeichnet, dass** die Haltemittel genau ein vorderes Halteelement (9) in einem vorderen Bereich der Trägerschiene (4) umfassen.

4. Vorrichtung nach einem der vorhergehenden Ansprüche, **dadurch gekennzeichnet, dass** die Haltemittel ein vorderes Halteelement (9) in einem vorderen Endbereich der Trägerschiene (4) und vom vorderen Halteelement (9) beabstandet eine weitere Haltefunktion (10) an der Trägerschiene (4) ausgebildet ist, über welche die Trägerschiene (4) an der Stabanordnung (8) festlegbar ist.

5. Vorrichtung nach einem der vorhergehenden Ansprüche, **dadurch gekennzeichnet, dass** das Klemmteil (15) als plattenförmiges Blechteil ausgestaltet ist.

6. Vorrichtung nach einem der vorhergehenden Ansprüche, **dadurch gekennzeichnet, dass** das vordere Halteelement (9) fest fixiert an der Trägerschiene (4) vorhanden ist.

7. Vorrichtung nach einem der vorhergehenden Ansprüche, **dadurch gekennzeichnet, dass** der Anlageabschnitt (17) des Halteelements (9) an einem oberen Ende eines Schenkels des U-förmigen Vertikalabschnitts (20) ausgebildet ist.

8. Schubelement, das an einem Wandabschnitt bewegbar anordenbar ist, insbesondere Gargutträger (6, 7) für einen Backofen, mit einer Vorrichtung (1, 2) nach einem der vorhergehenden Ansprüche.

9. Möbel insbesondere Haushaltseinrichtung wie eine Kücheneinrichtung mit einem Schubelement nach Anspruch 8.

## Claims

1. Device (1, 2) for guiding the movement of a drawer element that is moveably arranged on a side wall section by means of the device (1, 2), wherein the device (1, 2) comprises a support rail (4) that can be associated with the side wall section and a pull-out rail (3) that cooperates with the drawer element, which can be displaced relative to the support rail (4), and wherein the support rail (4) can be disconnectably fitted to a rod arrangement (8) on the side wall section via holding means matched to the rod arrangement (8), wherein the holding means are designed in such a way that the holding means can be fixed in abutment against a horizontally aligned rod section (12) of the rod arrangement (8), wherein the holding means additionally circumferentially lie against a vertically aligned rod section (13) of the rod arrangement (8) across a part circumference of the vertically aligned rod section (13), so that the device (1, 2) can be fixed for guiding the movement on the rod arrangement (8), wherein the holding means have a holding element (9) with an abutment section (17), which can be abutted against the horizontally aligned rod section (12) of the rod arrangement (8), and an adjustable clamping part (15) is envisaged on the holding element (9), which is provided in a clamping position on a side opposite the abutment section (17) for clamping to the horizontal rod section (12), wherein a distance between the abutment section (17) and the clamping part (15) is matched to an outer dimension of the horizontally aligned rod section (12) of the rod arrangement (8) in the clamping position of the clamping part (15), and the clamping part (15) is formed on an operating section (16a) provided elastically flexible on the holding element (9), **characterised in that** the holding element (9) has a U-shaped vertical section (20) for encompassing the vertically aligned rod section (13) of the rod arrangement (8), wherein the abutment section (17) of the holding element (9) is formed on a leg of the U-shaped vertical section (20).

2. Device according to claim 1, **characterised in that** the operating section (16a) is designed for a manual adjustment of the clamping part (15).

3. Device according to one of the preceding claims, **characterised in that** the holding means comprise exactly one front holding element (9) in a front area of the support rail (4).

4. Device according to one of the preceding claims, **characterised in that** the holding means comprises a front holding element (9) in a front end area of the support rail (4) and a further holding function (10) is formed on the support rail (4) at a distance from the front holding element (9), via which the support rail (4) can be fitted to the rod arrangement (8).

5. Device according to one of the preceding claims, **characterised in that** the clamping part (15) is designed as a plate-shaped sheet metal part.

6. Device according to one of the preceding claims, **characterised in that** the front holding element (9) is provided firmly fixed to the support rail (4).

7. Device according to one of the preceding claims, **characterised in that** the abutment section (17) of the holding element (9) is formed in an upper end of a leg of the U-shaped vertical section (20).

8. Drawer element that can be moveably arranged in a wall section, in particular a cooked food tray (6, 7) for an oven, with a device (1, 2) according to one of the preceding claims.

9. Furniture item, in particular household equipment such as kitchen equipment, with a drawer element according to claim 8.

## Revendications

1. Dispositif (1, 2) pour guider le mouvement d'un élément à pousser qui peut être disposé mobile au moyen du dispositif (1, 2) sur une partie de paroi latérale, dans lequel le dispositif (1, 2) comprend un rail support (4) pouvant être associé à la partie de paroi latérale et un rail coulissant (3) coopérant avec l'élément à pousser et pouvant coulisser par rapport au rail support (4), le rail support (4) pouvant être monté de façon détachable sur un ensemble de tiges (8) placé sur la partie de paroi latérale par le biais de moyens de retenue adaptés à l'ensemble de tiges (8), les moyens de retenue étant conçus de telle sorte que les moyens de retenue peuvent être fixés de façon contiguë à une section de tige (12) orientée horizontalement de l'ensemble de tiges (8), les moyens de retenue étant en outre contiguës à une section de tige (13) orientée verticalement en l'entourant sur une partie de la circonférence de la section de tige (13) orientée verticalement de telle sorte que le dispositif (1, 2) peut être fixé à l'ensemble de tiges (8) pour un mouvement guidé, les moyens de retenue présentant un élément de retenue (9) muni d'une section d'appui (17) qui peut être mise en appui sur la section de tige (12) orientée horizontalement de l'ensemble de tiges (8), et un élément de serrage (15) est présent, lequel peut être réglé sur l'élément de retenue (9) et est présent dans une position de serrage sur un côté opposé à la section d'appui (17) en vue d'un serrage sur la section de tige (12) horizontale, la distance entre la section d'appui (17) et l'élément de serrage (15) en position de serrage de l'élément de serrage (15) étant adaptée à des dimensions extérieures de la section de tige (12) orientée horizontalement, et l'élément de serrage (15) est formé sur une section d'actionnement (16a) pouvant s'écarter de façon élastique prévue sur l'élément de retenue (9), **caractérisé en ce que** l'élément de retenue (9) présente une section verticale (20) en forme de U pour enserrer la section de tige (13) orientée verticalement de l'ensemble de tiges (8), la section d'appui (17) de l'élément de retenue (9) étant formée sur une branche de la section verticale (20) en forme de U.

2. Dispositif selon la revendication 1, **caractérisé en ce que** la section d'actionnement (16a) est conçue pour un réglage manuel de l'élément de serrage (15).

3. Dispositif selon l'une des revendications précédentes, **caractérisé en ce que** les moyens de retenue comprennent exactement un élément de retenue antérieur (9) dans une région antérieure du rail support (4).

4. Dispositif selon l'une des revendications précédentes, **caractérisé en ce que** les moyens de retenue comprennent un élément de retenue (9) antérieur dans une région d'extrémité antérieure du rail support (4) et une fonction de retenue (10) supplémentaire est réalisée sur le rail support (4) à distance de l'élément de retenue (9) au moyen de laquelle le rail support (4) peut être fixé sur l'ensemble de tiges (8).

5. Dispositif selon l'une des revendications précédentes, **caractérisé en ce que** l'élément de serrage (15) est conçu sous la forme d'une pièce de tôle en forme de plaque.

6. Dispositif selon l'une des revendications précédentes, **caractérisé en ce que** l'élément de retenue (9) antérieur est prévu fermement fixé sur le rail support (4).

7. Dispositif selon l'une des revendications précédentes, **caractérisé en ce que** la section d'appui (17) de l'élément de retenue (9) est formée sur une extrémité supérieure d'une branche de la section verticale (20) en forme de U.

8. Élément à pousser pouvant être disposé mobile sur une partie de paroi, en particulier support pour aliments à cuire (6, 7) pour un four de cuisson, avec un dispositif (1, 2) selon l'une des revendications précédentes.

9. Meuble, en particulier appareil ménager tel qu'appareil de cuisine, muni d'un élément à pousser selon la revendication 8.
